# EUROPEAN PATENT APPLICATION

(11) **EP 2 017 999 A1**
(43) Date of publication of application: **21.01.2009**
(21) Application number: 07764137.1
(22) Date of filing: 29.06.2007
(51) Int. Cl.: H04L 9/32, H04L 29/06, H04L 12/24, H04L 9/00

(54) **THE METHOD, DEVICE AND SYSTEM FOR NETWORK SERVICE AUTHENTICATING**

(30) Priority: 20.09.2006 CN 200610062700
(71) Applicant: Huawei Technologies Co., Ltd., Longgang District, Shenzhen, Guangdong 518129 (CN)
(72) Inventor: WANG, Yulong, Shenzhen, Guangdong 518129 (CN); ZHAO, Hang, Shenzhen, Guangdong 518129 (CN); GE, Shengping, Shenzhen, Guangdong 518129 (CN); LI, Decang, Shenzhen, Guangdong 518129 (CN); ZHANG, Yafeng, Shenzhen, Guangdong 518129 (CN)
(74) Representative: Thun, Clemens
(86) International application number: PCT/CN2007/070208
(87) International publication number: WO 2008/034355

(57) **Abstract**

The invention discloses a method for network service authentication. The method includes: an AAA server receiving a network service authentication request which contains a user access device identifier; the AAA server determining whether the user is allowed to use the requested network service according to the user access device identifier and a preset correspondence between user access device identifier(s) and network service(s). The invention also discloses an apparatus and system for network service authentication. Based on the invention, a user's right to use the network service may be authenticated according to the user access device.

## Description

### Field of the Invention

The invention relates to the communication field, and in particular, to a method, apparatus and system for network service authentication.

### Background of the Invention

After fast development over the past years, communication networks have stepped into a mature period and operators provide more and more ways for users to use the network services. Current authentication, authorization and accounting for network users are generally provided by a user access device and a network authentication apparatus together, where the network authentication apparatus may be an authentication, authorization and accounting (AAA) server. The user access device mainly provides a physical path and multiple services for a user to access the network, and the AAA server is responsible for establishing service policies and managing services and users. Most of the information interactions between the user access device and the AAA server are implemented through the Remote Authentication Dial in User Service (RADIUS) protocol, which defines the interfaces of the user access device and the AAA server. The RADIUS protocol operates in a client/server mode, in which the user access device serves as the client and provides user information for the AAA server, and the AAA server makes a decision according to the user information reported by the user access device, and returns the decision to the user access device for execution. In the conventional technology, the AAA server sets a user's right to use a network service according to the user information, and authenticates the user's right to use a network service according to the user information reported by the user access device. So far, it is unfulfillable to authenticate a user's right to use a network service according to the user access device.

### Summary of the Invention

An embodiment of the invention provides a method for network service authentication, which can authenticate a user's right to use a network service according to a user access device.

Another embodiment of the invention provides an apparatus for network service authentication, which can authenticate a user's right to use a network service according to a user access device

Another embodiment of the invention provides a system for network service authentication, which can authenticate a user's right to use a network service according to a user access device.

The technical solutions in accordance with the embodiments of the invention are implemented as follows:

A method for network service authentication includes:

by an AAA server, receiving a network service authentication request, which contains a user access device identifier; and

determining whether the requested network service can be used, according to the user access device identifier and a preset correspondence between user access device identifier(s) and network service(s).

An apparatus for network service authentication includes an information transceiver unit, an information storing unit and an information processing unit, where:

the information transceiver unit is adapted to receive a network service authentication request containing a user access device identifier sent by a user access device, transmit the request to the information processing unit, and transmit to the user access device the result of whether the requested network service can be used sent by the information processing unit;

the information storing unit is adapted to store a correspondence between user access device identifier(s) and network service(s); and

the information processing unit is adapted to receive the network service authentication request transmitted by the information transceiver unit, determine whether the requested network service can be used according to the user access device identifier contained in the request and the correspondence between user access device identifier(s) and network service(s) stored by the information storing unit, and send the determination result of whether the requested network service can be used to the information transceiver unit.

A system for network service authentication includes a user access device and a network service authentication unit, where:

the user access unit is adapted to receive a user's request for a network service, send to the network service authentication unit a network service authentication request which contains a user access device identifier, and receive a message of whether the requested network service can be used sent by the network service authentication unit; and

the network service authentication unit is adapted to store a correspondence between user access device identifier(s) and network service(s); receive a network service authentication request sent by the user access device, determine whether the requested network service can be used according to the user access device identifier contained in the request and the correspondence between user access device identifier(s) and network service(s), and send the determination result of whether the requested network service can be used to the user access device.

According to the method for network service authentication provided by an embodiment of the invention, after receiving a network service authentication request, the AAA server determines whether the requested network service can be used according to the user access device identifier contained in the request and the correspondence between user access authentication identifier(s) and network service(s), so as to authenticate the user's right to use the network service according to the user access device.

The apparatus for network service authentication provided by an embodiment of the invention stores the correspondence between user access device identifier(s) and network service(s), and determines whether the requested network service can be used according to the user access device identifier contained in the received network service authentication request and the stored correspondence between user access device identifier(s) and network service(s), so as to authenticate the user's right to use the network service according to the user access device.

The system for network service authentication provided by an embodiment of the invention includes a network service authentication unit. The network service authentication unit stores the correspondence between user access device identifier(s) and network service(s), and determines whether the requested network service can be used according to the user access device identifier in the received network service authentication request and the stored correspondence between user access device identifier(s) and network service(s), so as to authenticate the user's right to use the network service according to the user access device.

### Brief Description of the Drawings

Figure 1 is a flowchart of the method for network service authentication in accordance with an embodiment of the invention;

Figure 2 is a flowchart of a preferred implementation mode of the method for network service authentication in accordance with an embodiment of the invention;

Figure 3 is the flowchart of a first preferred embodiment of the step of authenticating a network service authentication request according to the correspondence between user access device identifier group(s) and network service(s) in the procedure illustrated in Figure 2;

Figure 4 is the flowchart of a second preferred embodiment of the step of authenticating a network service authentication request according to the correspondence between user access device identifier group(s) and network service(s) in the procedure illustrated in Figure 2;

Figure 5 is a schematic diagram illustrating the structure of the apparatus for network service authentication in accordance with an embodiment of the invention; and

Figure 6 is a schematic diagram illustrating the structure of the system for network service authentication in accordance with an embodiment of the invention.

### Detailed Description of the Invention

For better understanding of the technical solutions of the embodiments of the invention, the embodiments are described in detail with reference to the accompanying drawings hereunder.

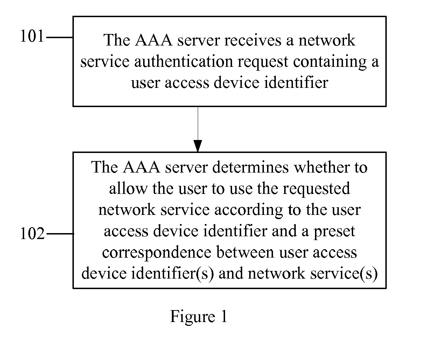

Firstly, the method for network service authentication provided by an embodiment of the invention is described. Figure 1 is the flowchart of the method for network service authentication provided by an embodiment of the invention.

Network services may include broadband Internet service, video service and so on. A user can only use the network service which is distributed by an operator and corresponds to the user access device used by the user. For example, a user in a suburb may use a broadband Internet service of which the fee is relatively low, but a user in a city cannot use such broadband Internet service.

A user initiates a request for the network service to the user access device, and the user access device initiates a network service authentication request to a network service authentication entity to determine whether the user is allowed to use the requested network service.

A correspondence between user access device identifier(s) and network service(s) is preset. The correspondence may be a correspondence between one user access device and one network service, a correspondence between one user access device and more than one network service, or a mixed correspondence between a user access device group and one or more than one network service, where the user access device group may include more than one user access device, each user access device having its own user access device identifier.

As shown in Table 1, user access device identifier 1 corresponds to network service A, user access device identifier 2 corresponds to network service B and network service C, and the like.

**Table 1**

| | |
|---|---|
| User access device identifier 1 | Network service A |
| User access device identifier 2 | Network service B, network service C |
| User access device identifier 3 | Network service C |

As shown in Table 2, user access device identifier group (1) includes user access device identifier 1, user access device identifier 2, user access device identifier 3 and so on, and user access device identifier group (2) includes user access device identifier 4, user access device identifier 5, user access device identifier 6, etc. User access device identifier group (1) corresponds to network service A, and user access device identifier group (2) corresponds to network service A and network service B.

**Table 2**

| | |
|---|---|
| User access device identifier group (1) | Network service A |
| User access device identifier group (2) | Network service A, network service B |
| User access device identifier group (3) | Network service C |

The user access devices in a user access device identifier group may locate in one or several particular areas, such as a county, an urban area or a suburb of a city, so that the network service may be distributed to the particular area(s).

Based on practical needs, the above correspondence may be discretionarily set to a mixed correspondence between user access device(s) and network service(s), or between user access device group(s) and network service(s), for example, the correspondence shown in Table 3.

**Table 3**

| | |
|---|---|
| User access device identifier 1 | Network service A |
| User access device identifier 2 | Network service B, network service C |
| User access device identifier group (3) | Network service A |
| User access device identifier group (4) | Network service A, network service B |

In practice, some network services can be used by all users. For example, a video service may be used by all users under a same condition. For a network service that can be used by all users, there is no need to preset a correspondence between the network service and user access device identifier(s).

The procedure illustrated in Figure 1 includes:

Step 101: The AAA server receives a network service authentication request containing a user access device identifier.

In this step, the user access device includes, but is not limited to, a network access server, a local area network (LAN) switch, and an IP telephone gateway; for example, the user access device may be a broadband access device, or a narrowband access device. A user's request for a network service may be a general request for Internet access, or a particular request, such as a request for accessing a particular network service.

Step 102: The AAA server determines whether the requested network service can be used according the user access device identifier and a preset correspondence between user access device identifier(s) and network service(s).

In this step, the AAA server determines whether the requested network service can be used according to the user access device identifier contained in the network service authentication request and the preset correspondence between user access device identifier(s) and network service(s).

In the case that the network service authentication request contains user identity data, before determining whether the requested network service can be used, the AAA server may perform identity authentication according to the user identity data, and if the identity authentication fails, directly deny the network service, or if the identity authentication succeeds, determine whether the requested network service can be used according to the correspondence between user access device identifier(s) and network service(s).

Because some network services are not preset to correspond to any particular user access device identifier, but can be used by any user, before determining whether the requested network service can be used, the AAA server may first query for the correspondence between user access device identifier(s) and network service(s) and determine whether the requested network service is preset to correspond to a particular user access device identifier; if the requested service is not preset to correspond to a particular user access device identifier, the AAA server directly allows the user to use the requested network service; or if the requested service is preset to correspond to a particular user access device identifier, the AAA server determines whether the requested network service can be used according to the correspondence between user access device identifier(s) and network service(s).

The AAA server may authenticate the user identity before or after determining whether the requested network service is preset to correspond to a particular user access device identifier. There is no strict requirement for the time sequence.

The specific method for determining whether the requested network service can be used may be that: the AAA server authenticates the network service authentication request according to the correspondence between user access device identifier(s) and network service(s), and if the authentication succeeds, determines that the requested network service can be used, or else, rejects the user to use the requested network service. This method is generally applicable to the situation that the user requests a particular network service, but it is not limited to this situation.

According to the method for network service authentication provided by an embodiment of the invention, the AAA server determines whether the requested network service can be used according to the user access device identifier contained in the network service authentication request and the preset correspondence between user access authentication identifier(s) and network service(s), so as to authenticate the user's right to use the network service according to the user access device.

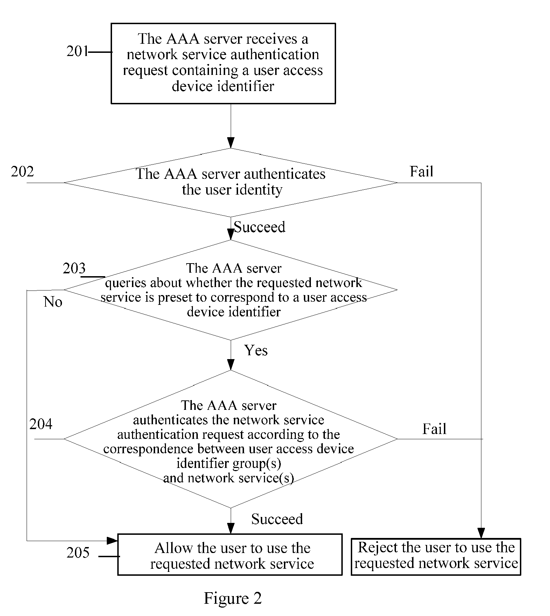

Figure 2 is a flowchart of a preferred implementation mode of the method for network service authentication in accordance with an embodiment of the invention. In this procedure, the preset correspondence between user access device identifier(s) and network service(s) is a correspondence between user access device identifier group(s) and network service(s). The procedure includes:

Step 201: The AAA server receives a network service authentication request containing a user access device identifier.

In this step, the network service authentication request may further contain user identity data.

Step 202: The AAA server authenticates the user identity.

In this step, the AAA server authenticates the user identity according to the user identity data contained in the network service authentication request; if the authentication fails, the user is not a legal user, and the user is rejected to use the requested network service and the procedure ends; or if the authentication succeeds, the user is a legal user, and step 203 is executed.

Step 203: The AAA server queries about whether the requested network service is preset to correspond to a user access device identifier, and if so, step 204 is executed, or else, the user is allowed to use the requested network service and the procedure ends.

In this step, for a network service that is preset to correspond to a user access device identifier, only the user corresponding to the user access device identifier which has the correspondence with the network service is allowed to use the network service. Users not corresponding to the user access devices are not allowed to use the network service; for a network service that is not preset to correspond to a user access device identifier, any user may use the network service if the user identity authentication succeeds.

Steps 204-205: The AAA server authenticates the network service authentication request according to the correspondence between user access device identifier group(s) and network service(s), and if the authentication succeeds, allows the user to use the requested network service, or if the authentication fails, rejects the user to use the requested network service.

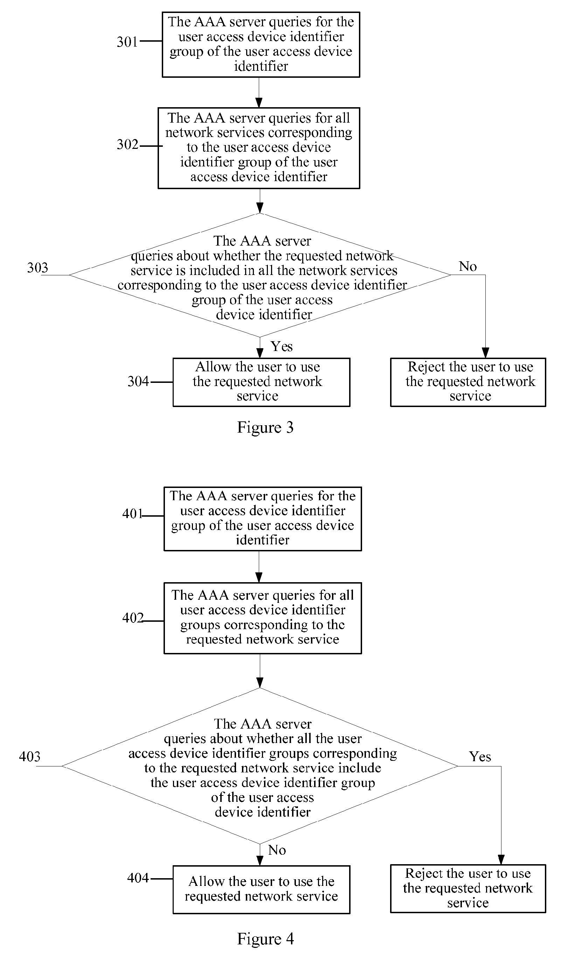

The specific authentication procedure in steps 204-205 may be implemented in different modes. Procedures shown in Figure 3 and Figure 4 are two preferred embodiments of the authentication procedure.

Figure 3 is the flowchart of a first preferred embodiment of the step of authenticating a network service authentication request according to the correspondence between user access device identifier group(s) and network service(s) in the procedure illustrated in Figure 2. Here the correspondence between user access device identifier(s) and network service(s) is a correspondence between user access device identifier group(s) and network service(s). The user access devices in the same user access device identifier group are located in the same geographical area where the operator distributes the network services. The procedure includes:

Step 301: The AAA server queries for the user access device identifier group of the user access device identifier.

Step 302: The AAA server queries for all network services corresponding to the user access device identifier group of the user access device identifier.

Steps 303-304: The AAA server queries about whether the requested network service is among the network services corresponding to the user access device identifier group, and if so, allows the user to use the requested network service, or else, rejects the user to use the requested network service.

In the procedure shown in Figure 3, the method for authenticating the network service authentication request is that: querying about whether the requested network service is among the network services corresponding to the user access device identifier group.

Figure 4 is the flowchart of a second preferred embodiment of the step of authenticating the use access device according to the correspondence between user access device identifier group(s) and network service(s) in the procedure illustrated in Figure 2. Here, the correspondence between user access device identifier(s) and network service(s) is a correspondence between user access device identifier group(s) and network service(s). The user access devices in the same user access device identifier group are located in the same geographical area where the operator distributes the network services. The procedure includes:

Step 401: The AAA server queries for the user access device identifier group of the user access device identifier.

Step 402: The AAA server queries for all user access device identifier groups corresponding to the requested network service.

Steps 403-404: The AAA server queries about whether all the user access device identifier groups corresponding to the requested network service include the user access device identifier group of the user access device identifier, and if so, allows the user to use the requested network service, or else, rejects the user to use the requested network service.

In the procedure shown in Figure 4, the method for authenticating the network service authentication request is that: querying about whether all the user access device identifier groups corresponding to the requested network service include the user access device identifier group of the user access device identifier.

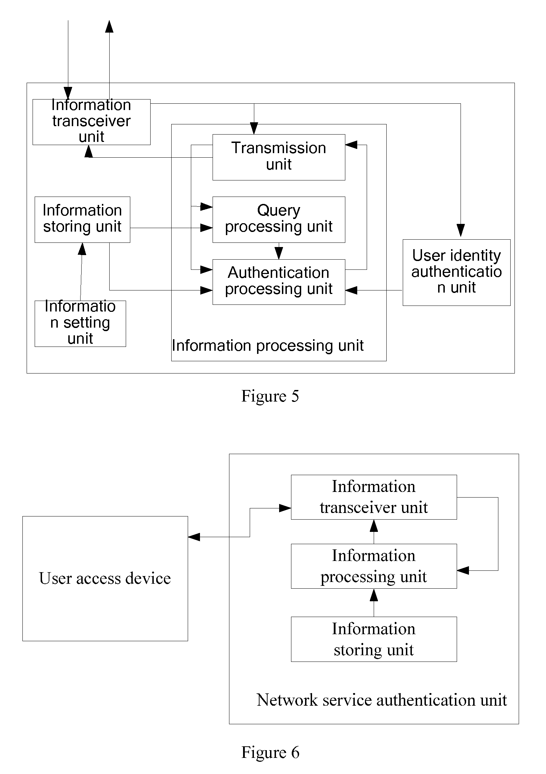

Secondly, an apparatus for network service authentication disclosed by an embodiment of the invention is described hereunder. Figure 5 is a schematic diagram illustrating the structure of the apparatus for network service authentication in accordance with an embodiment of the invention. The apparatus includes:

an information transceiver unit, adapted to receive a network service authentication request containing a user access device identifier sent by a user access device, transmit the request to an information processing unit, and transmit to the user access device the result of whether the requested network service can be used sent by the information processing unit.

the information storing unit, adapted to store a correspondence between user access device identifier(s) and network service(s); and

the information processing unit, adapted to receive the network service authentication request transmitted by the information transceiver unit, determine whether the requested network service can be used according to the user access device identifier contained in the request and the correspondence between user access device identifier(s) and network service(s) stored in the information storing unit, and send the determination result to the information transceiver unit.

The apparatus for network service authentication provided by an embodiment of the invention stores the correspondence between user access device identifier(s) and network service(s), determines whether the user is allowed to use the requested network service according to the user access device identifier contained in the network service authentication request and the stored correspondence between user access device identifier(s) and network service(s), so as to authenticate the user's right to use the network service according to the user access device.

The information processing unit of the apparatus for network service authentication provided by an embodiment of the invention may include a transmission unit and an authentication processing unit.

The transmission unit is adapted to receive the network service authentication request transmitted by the information transceiver unit, transmit the request to the authentication processing unit; receive the authentication result from the authentication processing unit and transmit the authentication result to the information transceiver unit.

The authentication processing unit is adapted to receive the network service authentication request transmitted by the transmission unit, authenticate the network service authentication request according to the correspondence between user access device identifier(s) and network service(s) stored by the information storing unit, and if the authentication succeeds, determine that the user is allowed to use the requested network service and send to the transmission unit an authentication result indicating the user is allowed to use the requested network service; or if the authentication fails, send to the transmission unit an authentication result indicating the user is rejected to use the requested network service.

In the apparatus for network service authentication provided by an embodiment of the invention, the information processing unit may further include a query processing unit, adapted to receive the network service authentication request transmitted by the transmission unit, query the information storing unit about whether the requested network service is preset to correspond to a user access device identifier, and provide the query result for the authentication processing unit in the information processing unit.

On this basis, the apparatus for network service authentication provided by an embodiment of the invention may further include an information setting unit and a user identity authentication unit.

The information setting unit is adapted to preset a correspondence between user access device identifier(s) and network service(s), and store the correspondence in the information storing unit.

The user identity authentication unit is adapted to receive the network service authentication request transmitted by the information transceiver unit, authenticate the user identity according to the user identity data contained in the request, and provide the authentication result for the authentication processing unit in the information processing unit.

The apparatus for network service authentication provided by an embodiment of the invention may operate according to the foregoing authentication method provided by an embodiment of the invention. There may be many implementation modes, for example, the apparatus may be an AAA server, or may be another apparatus that can implement the equivalent function.

Lastly, the system for network service authentication provided by an embodiment of the invention is described. Figure 6 is a schematic diagram illustrating the structure of the system for network service authentication provided by an embodiment of the invention. The system includes a user access device and a network service authentication unit.

The user access device is adapted to receive a user's request for a network service, send a network service authentication request to the network service authentication unit, where the request contains a user access device identifier, and receive a result of whether the requested network service can be used sent by the network service authentication unit.

The network service authentication unit is adapted to store a correspondence between user access device(s) and network service(s); receive the network service authentication request sent by the user access device, determine whether the user is allowed to use the requested network service according to the user access device identifier contained in the request and the correspondence between user access device identifier(s) and network service(s), and send the determination result of whether the requested network service can be used to the user access device.

The system for network service authentication provided by an embodiment of the invention determines whether the requested network service can be used according to the user access device identifier contained in the network service authentication request and the correspondence between user access device identifier(s) and network service(s) stored in the system, so as to authenticate the user's right to use the network service according to the user access device.

The foregoing system for network service authentication provided by an embodiment of the invention includes at least one user access device and at least one network service authentication unit. The apparatus for network service authentication provided by an embodiment of the invention may be taken as a preferred implementation of the network service authentication unit of the foregoing system, and the internal structure of the network service authentication unit of the system is omitted here.

The foregoing are only preferred embodiments of the invention, and not intended to limit the invention. It is apparent to those skilled in the art that various modifications and variations may be made in form or in detail without departing from the spirit and scope of protection of the invention.

## Claims

1. A method for network service authentication, comprising:
by an authentication, authorization, accounting (AAA) server, receiving a network service authentication request, wherein the request contains a user access device identifier; and
determining whether the requested network service can be used according to the user access device identifier and a preset correspondence between user access device identifier(s) and network service(s).

2. The method of claim 1, wherein the determining whether the requested network service can be used comprises: by the AAA server, authenticating the network service authentication request according to the preset correspondence between user access device identifier(s) and network service(s), and if the authentication succeeds, allowing the user to use the requested network service, or if the authentication fails, rejecting the user to use the requested network service.

3. The method of claim 2, wherein the authenticating the network service authentication request comprises:
by the AAA server, querying for all network services corresponding to the user access device identifier contained in the network service authentication request; and
querying about whether the requested network service is among all the network services corresponding to the user access device identifier contained in the network service authentication request, and if so, allowing the user to use the requested network service, or else, rejecting the user to use the requested network service.

4. The method of claim 2, wherein the authenticating the network service authentication request comprises:
by the AAA server, querying for all user access device identifiers corresponding to the requested network service; and
querying about whether all the user access device identifiers corresponding to the requested network service include the user access device identifier contained in the network service authentication request, and if not, rejecting the user to use the requested network service, or else, allowing the user to use the requested network service.

5. The method of any of claims 1 to 4, wherein the correspondence between user access device identifier(s) and network service(s) comprises a correspondence between user access device identifier(s) and network service(s), and/or a correspondence between user access device identifier group(s) and network service(s), with the user access device identifier group comprising at least one user access device identifier.

6. The method of claim 5, wherein at least one user access device identifier in the user access device identifier group is located in the same geographical area.

7. The method of any of claims 1 to 4, further comprising: by the AAA server after receiving the network service authentication request, and before determining whether the requested network service can be used, querying about whether the requested network service is preset to correspond to a user access device identifier, and if not, directly allowing the user to use the requested network service, or else, executing the step of determining whether the requested network service can be used.

8. The method of claim 7, wherein the network service authentication request further contains user identity data, and the method further comprises: by the AAA server after receiving the network service authentication request and before querying about whether the requested network service is preset to correspond to a user access device identifier, authenticating the user identity according to the user identity data, and if the authentication fails, denying the requested network service, or if the authentication succeeds, executing the step of querying about whether the requested network service is preset to correspond to a user access device identifier.

9. The method of any of claims 1 to 4, wherein the user access device is a broadband access device.

10. An apparatus for network service authentication, comprising an information transceiver unit, an information storing unit and an information processing unit, wherein:
the information transceiver unit is adapted to receive a network service authentication request containing a user access device identifier sent by a user access device, transmit the request to the information processing unit, and transmit the result of whether the requested network service can be used sent by the information processing unit to the user access device;
the information storing unit is adapted to store a correspondence between user access device identifier(s) and network service(s); and
the information processing unit is adapted to receive the network service authentication request transmitted by the information transceiver unit, determine whether the requested network service can be used according to the user access device identifier contained in the request and the correspondence between user access device identifier(s) and network service(s) stored in the information storing unit, and send the determination result of whether the requested network service can be used to the information transceiver unit.

11. The apparatus of claim 10, wherein the information processing unit comprises a transmission unit and an authentication processing unit, wherein:
the transmission unit is adapted to receive the network service authentication request transmitted by the information transceiver unit and transmit the request to the authentication processing unit; receive an authentication result transmitted by the authentication processing unit, and transmit the authentication result to the information transceiver unit; and
the authentication processing unit is adapted to receive the network service authentication request transmitted by the transmission unit, authenticate the network service authentication request according to the correspondence between user access device identifier(s) and network service(s) stored in the information storing unit; and if the authentication succeeds, allow the user to use the requested network service, and send to the transmission unit an authentication result indicating the user is allowed to use the requested network service; or if the authentication fails, send to the transmission unit an authentication result indicating the user is rejected to use the requested network service.

12. The apparatus of claim 11, wherein the information processing unit further comprises a query processing unit, adapted to receive the network service authentication request transmitted by the transmission unit, query about whether the requested network service is preset to correspond to a user access device identifier in the information storing unit and send the query result to the authentication unit in the information processing unit.

13. The apparatus of claim 12, wherein the apparatus further comprises a user identity authentication unit, and the network service authentication request further comprises user identity data, wherein:
the user identity authentication unit is adapted to receive the network service authentication request transmitted by the information transceiver unit, authenticate the user identity according to the user identity data contained in the request and send the authentication result to the authentication processing unit in the information processing unit.

14. The apparatus of any of claims 10 to 13, further comprising an information setting unit, adapted to preset a correspondence between user access device identifier(s) and network service(s), and store the correspondence in the information storing unit.

15. The apparatus of any of claims 10 to 13, wherein the apparatus for network service authentication is an AAA server.

16. The apparatus of any of claims 10 to 13, wherein the correspondence between user access device identifier(s) and network service(s) includes a correspondence between user access device identifier(s) and network service(s), and/or a correspondence between user access device identifier group(s) and network service(s), with a user access device identifier group comprising at least one user access device identifier.

17. A system for network service authentication, comprising a user access device and a network service authentication unit, wherein:
the user access device is adapted to receive a user's request for a network service, and send a network service authentication request containing a user access device identifier to the network service authentication unit; and receive the result of whether the user is allowed to use the requested network service sent by the network service authentication unit; and
the network service authentication unit is adapted to store a correspondence between user access device identifier(s) and network service(s), receive the network service authentication request sent by the user access device, determine whether to allow the user to use the requested network service according to the user access device identifier contained in the request and the stored correspondence between user access device identifier(s) and network service(s), and send the determination result of whether the requested network service can be used to the user access device.

18. The system of claim 17, wherein the network service authentication unit further comprises an information transceiver unit, an information storing unit and an information processing unit, wherein:
the information transceiver unit is adapted to receive the network service authentication request containing the user access device identifier sent by the user access device, transmit the request to the information processing unit, and transmit the result of whether the user is allowed to use the requested network service sent by the information processing unit to the user access device;
the information storing unit is adapted to store a correspondence between user access device identifier(s) and network service(s); and
the information processing unit is adapted to receive the network service authentication request transmitted by the information transceiver unit, determine whether to allow the user to use the requested network service according to the user access device identifier contained in the request and the correspondence between user access device identifier(s) and network service(s) stored in the information storing unit; and transmit the determination result of whether the requested network service can be used to the information transceiver unit.
